Europäisches Patentamt

(19) European Patent Office

Office européen des brevets

(11) Numéro de publication: **0 122 274**
**B1**

(12) **FASCICULE DE BREVET EUROPEEN**

(45) Date de publication du fascicule du brevet:
**17.11.88**

(21) Numéro de dépôt: **83903297.6**

(22) Date de dépôt: **25.10.83**

(86) Numéro de dépôt international:
**PCT/FR 83/00215**

(87) Numéro de publication internationale:
**WO 84/01815 (10.05.84 Gazette 84/12)**

(51) Int. Cl.⁴: **F 24 J 2/04,** F 24 J 2/26

(54) **PERFECTIONNEMENTS APPORTES AUX CAPTEURS SOLAIRES.**

(30) Priorité: **25.10.82 FR 8217805**

(43) Date de publication de la demande:
**24.10.84 Bulletin 84/43**

(45) Mention de la délivrance du brevet:
**17.11.88 Bulletin 88/46**

(84) Etats contractants désignés:
**CH DE FR GB LI**

(56) Documents cités:
**EP - A - 0 028 112**
**DE - A - 2 542 348**
**DE - A - 3 100 521**
**FR - A - 2 316 553**
**US - A - 4 114 598**
**US - A - 4 210 129**

(73) Titulaire: **Ladriere, Serge Léon Arthur, Villa Khalouatna Avenue du Cap Roux, F-06360 Eze sur Mer (FR)**

(72) Inventeur: **Ladriere, Serge Léon Arthur, Villa Khalouatna Avenue du Cap Roux, F-06360 Eze sur Mer (FR)**

(74) Mandataire: **Gorree, Jean-Michel et al, Cabinet Plasseraud 84, rue d'Amsterdam, F-75009 Paris (FR)**

## Description

La présente invention concerne des perfectionnements apportés aux capteurs solaires, c'est-à-dire aux appareils agencés pour recueillir l'énergie calorifique contenue dans le rayonnement solaire et pour le transférer, au moins en partie, à un fluide caloporteur. L'invention a plus spécifiquement pour objet de perfectionner les capteurs solaires comportant, d'une part, une paroi d'absorption calorifique constituée par plusieurs panneaux en un matériau thermiquement conducteur, les panneaux adjacents étant inclinés l'un par rapport à l'autre dans une configuration en dents de scie et, d'autre part, des conduits pour le fluide caloporteur, constitués en un matériau thermiquement conducteur et situés unilatéralement sur la paroi d'absorption le long des arêtes définies par la configuration des panneaux.

De par la demande de brevet FR-A-2 316 553, on connaît déjà un capteur solaire comportant un absorbeur calorifique constitué par une plaque ondulée ayant une section transversale en dents de scie, avec des conduits pour le fluide caloporteur reposant au fond de chaque creux de la plaque.

Toutefois, ce document ne fournit aucun moyen de mise en œuvre pratique de cet agencement de principe, lequel, si appliqué tel qu'exposé et représenté dans le document en question, ne pourrait procurer aucun résultat intéressant en raison de la très mauvaise conduction thermique entre l'absorbeur calorifique et les conduits de fluide caloporteur.

En outre, ce capteur solaire connu est destiné à être, en position d'utilisation, disposé horizontalement, la plaque de l'absorbeur calorifique étant tournée vers le ciel. Aucune solution n'est proposée pour récupérer les rayonnements solaires avec un maximum d'efficacité quelle que soit l'époque de l'année où le capteur est utilisé.

Par ailleurs, d'après le brevet US-A-4 114 598, on connaît également une structure de capteur solaire telle qu'indiqué ci-dessus. Toutefois, dans cette structure connue, la paroi d'absorption calorifique est obtenue par assemblage de plusieurs éléments individuels constitués chacun par deux panneaux mutuellement inclinés formant un dièdre; l'assemblage de deux éléments est réalisé par emboîtement d'un organe tubulaire (formant conduit de circulation pour un fluide caloporteur), s'étendant le long d'un bord libre de l'un des panneaux d'un élément, dans une gouttière de retenue s'étendant le long du bord libre de l'autre panneau de l'élément voisin. Une telle structure obtenue par assemblage de plusieurs éléments ne présente aucune rigidité; en outre, la présence de la gouttière destinée à recevoir l'organe tubulaire alourdit chaque élément et le rend encombrant.

L'invention a donc essentiellement pour but de remédier, dans toute la mesure du possible, aux inconvénients ci-dessus exposés et de réaliser un capteur solaire agencé pour qu'un maximum de la chaleur accumulée dans l'absorbeur soit transmis au fluide caloporteur, et ce quelle que soit l'époque de l'année, et pour que le capteur ainsi perfectionné soit de structure simple, facile à fabriquer, à monter et à entretenir et d'un coût global peu élevé.

A ces fins, le capteur solaire conforme à l'invention se caractérise en ce que la paroi d'absorption calorifique est d'un seul tenant, en ce qu'en position de fonctionnement les arêtes sont orientées horizontalement, en ce que les arêtes situées à l'opposé du soleil se présentent sous forme d'une gouttière ouverte vers la direction d'incidence des rayons solaires et épousant étroitement la forme extérieure d'un des conduits de fluide caloporteur qui est logé en son intérieur et avec lequel elle est en contact thermiquement conducteur, en ce que l'angle outre les deux panneaux situés de part et d'autre de la gouttière est égal ou supérieur à l'angle compris entre le solstice d'hiver et le solstice d'été au lieu d'installation du capteur, et en ce que les panneaux ayant une inclinaison de la configuration en dents de scie sont situés dans un plan faisant un angle au moins égal à l'angle du solstice d'été par rapport à l'horizontale tandis que les panneaux ayant l'autre inclinaison sont situés dans un plan faisant un angle au plus égal à l'angle du solstice d'hiver par rapport à l'horizontale.

De préférence, l'angle formé par les deux panneaux est sensiblement supérieur à l'angle compris entre les solstices d'hiver et d'été et est compris entre 65° et 70°.

Pour simplifier le processus d'assemblage du capteur, les panneaux et la gouttière sont constitués en un matériau élastiquement déformable de manière que le conduit puisse être emboîté dans la gouttière en écartant élastiquement les bords de celle-ci.

Avantageusement, la paroi d'absorption calorifique est supportée par une enceinte fermée dont la paroi -paroi avant- tournée vers le soleil est constituée en un matériau transparent et dont la paroi opposée -paroi arrière- est constituée en un matériau thermiquement isolant; en outre, de préférence, la surface intérieure de la paroi arrière est réfléchissante.

Dans une réalisation particulière, la paroi d'absorption calorifique et la paroi arrière de l'enceinte délimitent un espace susceptible d'être parcouru par un gaz à réchauffer et il est prévu un orifice d'entrée d'air frais situé en partie basse de l'espace et un orifice de sortie d'air réchauffé situé en partie haute de l'espace. Le capteur ainsi constitué est susceptible d'assurer, cumulativement ou sélectivement, une double fonction, savoir réchauffer le fluide caloporteur (de l'eau par exemple) circulant dans les conduits et réchauffer un gaz (de l'air par exemple) circulant dans l'enceinte au contact de l'absorbeur.

L'invention sera mieux comprise à la lecture de la description détaillée qui suit de certains modes de réalisation donnés uniquement à titre d'exemples illustratifs, sans aucun caractère limitatif. Dans cette description, on se réfère aux dessins annexés sur lesquels:

– la figure 1 est une vue schématique en coupe transversale d'un capteur solaire agencé conformément à l'invention, et

– la figure 2 est une vue schématique en coupe transversale d'une variante d'un élément du capteur de la figure 1.

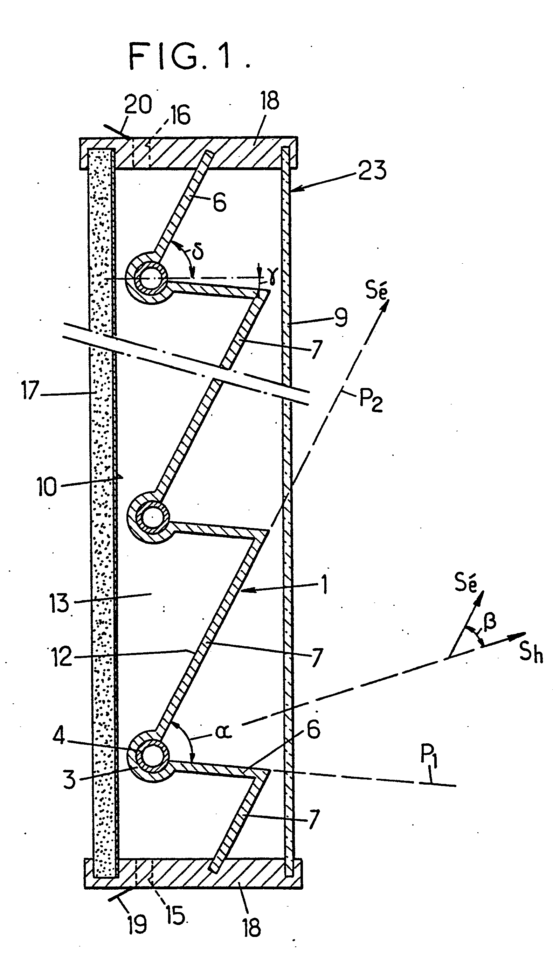

Le capteur solaire représenté à la fig. 1 comprend une enceinte close 23, de forme par exemple parallélépipédique rectangle pour des raisons de commodité de fabrication, de mise en place et de stockage, mais pouvant présenter toutes autres formes simples ou complexes que l'on peut souhaiter. Cette enceinte 23 est délimitée par deux parois principales, l'une (paroi avant 9) étant transparente et par exemple constituée en verre, et l'autre (paroi arrière 17) étant constituée par un panneau calorifugé constitué en tout matériau thermiquement isolé approprié (par exemple polystyrène). La face (10) tournée vers l'intérieur de la paroi 17 est revêtue d'un film ou feuille 10 réfléchissant les ondes électromagnétiques (en particulier les infra-rouges), ce film est en un mètal poli (aluminium, acier inoxydable, etc.).

Les autres parois (deux parois latérales dessus et fond) peuvent, par exemple, être constituées par une bande 18 (ou des tronçons de bandes réunis les uns aux autres) maintenant écartées l'une de l'autre les deux parois 9 et 17. Pour éviter les déperditions calorifiques, les liaisons entre les parois 9 et 17 et la bande 18 sont étanches aux fluides.

A l'intérieur de l'enceinte 23, une paroi d'absorption calorifique ou absorbeur 1, supporté lui aussi par la bande 18, s'étend entre les deux parois 9 et 17, sans toutefois les toucher. L'absorbeur 1 est constitué en matériau thermiquement bon conducteur et possède une succession de panneaux 6, 7, présentant respectivement des inclinaisons différentes, tous les panneaux d'une même inclinaison étant parallèles entre eux.

Deux panneaux 6, 7 consécutifs déterminent un dièdre rentrant d'angle α et se raccordent l'un à l'autre, dans la région du sommet du dièdre, par une gouttière 3 ouverte vers l'intérieur du dièdre, réalisée elle aussi en un matériau thermiquement conducteur et épousant étroitement la forme extérieure d'un conduit 4 destiné à véhiculer un fluide caloporteur (par exemple de l'eau). Comme le conduit 4 sera, en général, un tronçon de tube cylindrique de révolution, la gouttière 3 possède, en section transversale, la forme d'un arc de cercle.

On comprendra que cette structure se prête bien à une fabrication facile, dans la mesure où l'absorbeur 1 peut être obtenu par la déformation appropriée, par exemple par estampage ou matriçage, d'une feuille relativement épaisse d'un matériau thermiquement bon conducteur tel que l'aluminium; les gouttières 3 peuvent alors présenter un diamètre légèrement plus faible que le diamètre extérieur des conduits 4. Les tronçons de conduits 4 sont alors simplement emboîtés à force dans les gouttières 3, lesquelles enserrent élastiquement les tronçons de conduits respectifs en assurant ainsi un bon contact thermique entre absorbeur 1 et conduit 4. Si nécessaire, un intermédiaire, tel qu'une graisse aux silicones, peut être interposé entre les faces coopérantes des gouttières et des conduits pour améliorer la conduction thermique.

La face avant (c'est-à-dire la face exposée tournée vers la paroi avant 9) des panneaux 6, 7, peut avoir reçu un traitement sélectif par peinture ou par un procédé chimique.

L'angle α précité est au moins égal à l'angle β compris entre le solstice d'hiver (flèche $S_h$) et le solstice d'été (flèche $S_é$) au lieu d'installation du capteur. Autrement dit, les plans $P_1$ et $P_2$, dans lesquels se trouvent respectivement les panneaux forment un angle α qui, pour les régions françaises où l'angle β est de l'ordre de 47°, peut être compris entre 65° et 70°, de manière que, même dans les situations extrêmes, les rayons solaires viennent frapper les faces avant des panneaux 6 et 7.

Si on suppose que l'enceinte 23 est destinée à reposer dans la position représentée à la figure 1, il en résulte que les panneaux 6 forment un angle γ d'environ 5° à 10° par rapport à un plan horizontal (i.e. par rapport à un plan perpendiculaire aux parois principales 9 et 17) tandis que les panneaux 7 forment un angle δ d'environ 60° à 65° par rapport au même plan horizontal.

On peut faire en sorte que l'absorbeur 1 soit raccordé de façon étanche à la bande 18 sur tout son pourtour. Il en résulte un espace clos 13 entre l'absorbeur 1 et la face réfléchissante 10. Un orifice d'entrée d'air 15 est prévu à la base de l'enceinte pour l'entrée d'air frais dans l'espace 13 et un orifice de sortie d'air 16 est prévu en partie haute de l'enceinte pour la sortie hors de l'espace 13 de l'air qui s'est réchauffé au contact de la face arrière 12 de l'absorbeur 1. L'inclinaison γ donnée aux panneaux 6 permet d'assurer la circulation naturelle ascendante de l'air réchauffé. Des dispositifs obturateurs 19, 20 peuvent être prévus pour obturer respectivement les orifices 15, 16 lorsque la circulation de l'air doit être interrompue dans l'espace 13.

Le capteur solaire qui vient d'être décrit permet donc, cumulativement ou sélectivement, de réchauffer un fluide caloporteur (eau) circulant dans les conduits 4 et un gaz (air) traversant l'espace 13.

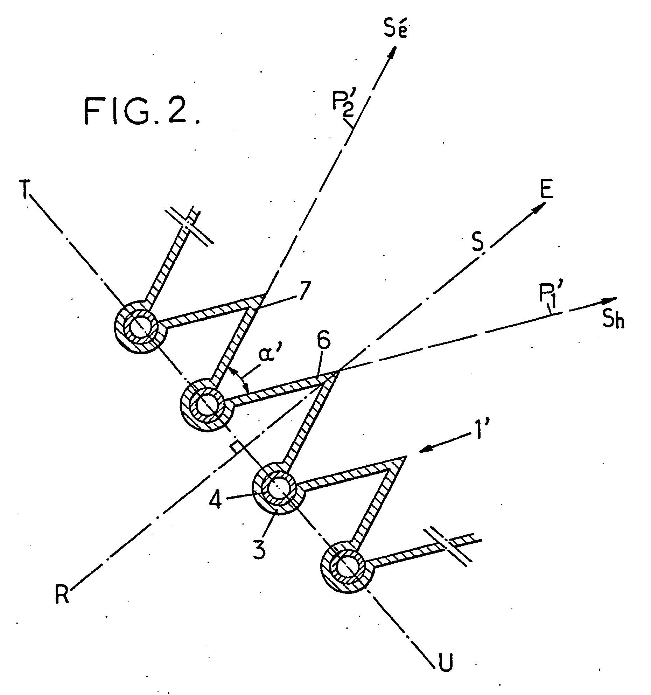

La figure 2 représente une variante de réalisation de l'absorbeur 1. La structure de l'absorbeur 1' de la figure 2 reste identique à celle de l'absorbeur 1, savoir une succession de panneaux 6, 7 d'inclinaison différente formant des dièdres et se raccordant les uns aux autres, dans les dièdres rentrant, par des gouttières respectives 3, ouvertes vers l'intérieur des dièdres, et enserrant élastiquement des conduits 4 parcourus par un fluide caloporteur.

La différence existant par rapport au mode de réalisation précédent tient au fait que l'absorbeur est conçu pour être utilisé en position inclinée de manière telle que l'axe (TU) d'alignement des centres des gouttières soit orthogonal à l'axe (RS) joignant le lieu d'utilisation à l'équinoxe du soleil (flèche E). Les panneaux 6 et 7 sont alors situés symétriquement par rapport à l'axe (RS) ou à des axes parallèles à celui-ci; autrement dit les plans P'$_1$ et P'$_2$ contenant les panneaux 6 et 7 forment un même angle par rapport à l'axe (RS) et l'angle α' formé par ces panneaux peut être choisi approximativement égal à l'angle compris entre les solstices d'hiver et d'été (flèches S$_h$ et S$_é$), soit approximativement 47°.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

Le capteur solaire agencé conformément à l'invention peut être disposé sur des façades d'immeubles, en appui sur des barrières, des gardes-fous de terrasses, des balcons, contre un mur ou une clôture, sur le bandeau disponible sous les gouttières de maisons, en intégration totale dans des façades d'immeubles agencés pour être chauffés à l'aide de l'énergie solaire. Le capteur solaire de l'invention peut s'intégrer facilement dans des habitations individuelles légères utilisant un chauffage à air chaud.

Des applications particulièrement intéressantes peuvent être le séchage de céréales, de fourrages, l'élévation de température et la régulation de l'hygrométrie dans des serres, le chauffage de l'eau et de l'air dans des piscines, le chauffage de l'eau sanitaire, etc.

**Revendications**

1. Capteur solaire agencé pour échauffer un fluide caloporteur, ce capteur comportant, d'une part, une paroi d'absorption calorifique (1) constituée par plusieurs panneaux (6, 7) en un matériau thermiquement conducteur, les panneaux adjacents étant inclinés l'un par rapport à l'autre dans une configuration en dents de scie, et, d'autre part, des conduits (4) pour le fluide caloporteur, constitués en un matériau thermiquement conducteur et situés unilatéralement sur la paroi d'absorption le long des arêtes définies par la configuration des panneaux, caractérisé en ce que la paroi d'absorption calorifique (1) est d'un seul tenant, en ce qu'en position de fonctionnement les arêtes sont orientées horizontalement, en ce que les arêtes situées à l'opposé du soleil se présentent sous forme d'une gouttière ouverte (3) vers la direction d'incidence des rayons solaires et épousant étroitement la forme extérieure d'un des conduits (4) de fluide caloporteur qui est logé en son intérieur et avec lequel elle est en contact thermiquement conducteur, en ce que l'angle (α) entre les deux panneaux (6, 7) situés de part et d'autre de la gouttière est égal ou supérieur à l'angle compris entre le solstice d'hiver et le solstice d'été au lieu d'installation du capteur, et en ce que les panneaux (7) ayant une inclinaison de la configuration en dents de scie sont situés dans un plan (P$_2$) faisant un angle au moins égal à l'angle du solstice d'été (S$_é$) par rapport à l'horizontale tandis que les panneaux (6) ayant l'autre inclinaison sont situés dans un plan (P$_1$) faisant un angle au plus égal à l'angle du solstice d'hiver (S$_h$) par rapport à l'horizontale.

2. Capteur selon la revendication 1, caractérisé en ce que l'angle formé par les deux panneaux est sensiblement supérieur à l'angle compris entre les solstices d'hiver et d'été et est compris entre 65° et 70°.

3. Capteur selon la revendication 1, caractérisé en ce que les panneaux (6, 7) et la gouttière (3) sont constitués en un matériau élastiquement déformable de manière que le conduit (4) puisse être emboîté dans la gouttière en écartant élastiquement les bords de celle-ci.

4. Capteur selon l'une quelconque des revendications 1 à 3, caractérisé en ce que les conduits (4) sont de section cylindrique de révolution.

5. Capteur selon l'une quelconque des revendications 1 à 4, caractérisé en ce que la paroi d'absorption calorifique (1) est supportée par une enceinte fermée (23) dont la paroi -paroi avant- (9) tournée vers le soleil est constituée en un matériau transparent et dont la paroi opposée -paroi arrière- (17) est constituée en un matériau thermiquement isolant.

6. Capteur selon la revendication 5, caractérisé en ce que la surface intérieure (10) de la paroi arrière (7) est réfléchissante.

7. Capteur selon la revendication 5 ou 6, caractérisé en ce que la paroi d'absorption calorifique (1) et la paroi arrière (17) de l'enceinte délimitent un espace (13) susceptible d'être parcouru par un gaz à réchauffer et en ce que sont prévus un orifice (15) d'entrée d'air frais situé en partie basse de l'espace (13) et un orifice (16) de sortie d'air réchauffé situé en partie haute de l'espace (13).

**Claims**

1. A solar collector adapted to heat a heat-carrying fluid, said collector comprising, on the one hand, a heat absorbing wall (1) constituted of several panels (6, 7) made from a heat conducting material, adjacent panels being sloped with respect to each other so as to form a serrated configuration, and, on the other hand, ducts (4) for the heat-carrying fluid, made from a heat conducting material and located unilaterally on the absorbing wall along edges defined by the panel configuration, characterized in that the heat absorbing wall (1) constitutes a single piece; in that in use position edges are horizontally oriented; in that edges opposite to the sun present with the shape of a gutter (3) opened towards the direction of incidence of the sun rays and closely take on the outer shape of one of said heat carrying fluid ducts (4) which is housed therein-side and with which it is in heat conducting cooperation; in that the angle (α) between the two panels (6, 7) located on both sides of the gutter is equal to or greather than the angle comprised between the winter solstice and the summer solstice at the place whire the collector is installed; and in that panels (7) having one slope in the serrated configuration extend in a plane ($P_2$) standing at an angle at least equal to the angle of the summer solstice ($S_é$) with respect to an horizontal whereas panels (6) having the other slope extend in a plane ($P_1$) standing at an angle at most equal to the angle of the winter solstice ($S_h$) with respect to the horizontal.

2. The collector according to claim 1, characterized in that the angle formed by the two panels is substantially greater than the angle between the winter and summer solstices and is between 65° and 70°.

3. The collector according to claim 1 and 2, characterized in that the panels (6, 7) and the gutter (3) are made from an elastically deformable material so that the duct (4) may fit into the gutter while resiliently urging apart the edges thereof.

4. The collector according to any one of claims 1 to 3, characterized in that the ducts (4) have a cross-section cylindrical in revolution.

5. The collector according to any one of claims 1 to 4, characterized in that the heat absorbing wall (1) is supported by a closed enclosure (23) the wall of which -front wall- (9) directed towards the sun is made from a transparent material and the opposite wall of which -rear wall- (17) is made from a heat insulating material.

6. The collector according to claim 5, characterized in that the inner surface (10) of the rear wall (7) is reflecting.

7. The collector according to claim 5 or 6, characterized in that the heat absorbing wall (1) and the rear wall (17) of the enclosure define a space (13) through which may flow a gas to be heated and in that there are provided a fresh air intake orifice (15) situated at the low part of the space (13) and a heated air outlet orifice (16) situated at the top part of the space (13).

**Patentansprüche**

1. Sonnenkollektor zum Erwärmen eines Wärmeträgerfluids, der zum einen eine Wärmeabsorptionswand (1), die aus mehreren Platten (6, 7) aus thermisch leitendem Material gebildet ist, wobei die benachbarten Platten relativ zueinander sägezahnförmig geneigt sind, und zum anderen Leitungen (4) für das Wärmeträgerfluid aufweist, die aus einem thermisch leitenden Material bestehen und auf der einen Seite der Absorptionswand längs der durch die Form der Platten begrenzten Kanten angeordnet sind, dadurch gekennzeichnet, dass die Wärmeabsorptionswand (1) aus einem einzigen Stück besteht, dass die Kanten in der Betriebslage horizontal gerichtet sind, dass die auf der der Sonne abgekehrten Seite liegenden Kanten die Form einer zu den einfallenden Sonnenstrahlen hin offenen Dachrinne (3) aufweisen, die der äusseren Form einer der Leitungen (4) für das Wärmeträgerfluid, die in ihrem Inneren angeordnet ist und mit der sie in thermisch leitendem Kontakt steht, eng angepasst ist, und dass der Winkel ($\alpha$) zwischen den beiderseits der Rinne angeordneten beiden Platten (6, 7) gleich oder grösser als der Winkel zwischen der Wintersonnenwende und der Sommersonnenwende am Einbauort des Kollektors ist, und dass die Platten (7) mit der einen Neigung der Sägezahnform in einer Ebene ($P_2$) liegen, die mit der Horizontalen einen Winkel einschliesst, der mindestens gleich dem der Sommersonnenwende ($S_e$) ist, während die die andere Neigung aufweisenden Platten (6) in einer Ebene ($P_1$) liegen, die mit der Horizontalen einen Winkel einschliesst, der höchstens gleich dem Winkel der Wintersonnenwende ($S_h$) ist.

2. Kollektor nach Anspruch 1, dadurch gekennzeichnet, dass der durch die beiden Platten gebildete Winkel etwas grösser als der Winkel zwischen der Winter- und Sommersonnenwende ist und zwischen 65° und 70° liegt.

3. Kollektor nach Anspruch 1, dadurch gekennzeichnet, dass die Platten (6, 7) und die Rinne (3) aus einem derart elastisch verformbaren Material gebildet sind, dass die Leitung (4) in die Rinne unter elastischer Spreizung ihrer Ränder eingefügt werden kann.

4. Kollektor nach irgendeinem der Ansprüche 1 bis 3, dadurch gekennzeichnet, dass die Leitungen (4) einen kreiszylindrischen Querschnitt aufweisen.

5. Kollektor nach irgendeinem der Ansprüche 1 bis 4, dadurch gekennzeichnet, dass die Wärmeabsorptionswand (1) durch ein geschlossenes Gehäuse (23) getragen wird, deren der Sonne zugekehrte Wand – Vorderwand – (9) aus transparentem Material und deren gegenüberliegende Wand – Rückwand – (17) aus thermisch isolierendem Material gebildet ist.

6. Kollektor nach Anspruch 5, dadurch gekennzeichnet, dass die innere Oberfläche (10) der Rückwand (17) reflektierend ist.

7. Kollektor nach Anspruch 5 oder 6, dadurch gekennzeichnet, dass die Wärmeabsorptionswand (1) und die Rückwand (17) des Gehäuses einen Raum (13) begrenzen, die von einem zu erwärmenden Gas durchströmbar ist, und dass eine Frischluft-Einlassöffnung (15) im unteren Teil des Raumes (13) und eine Warmluft-Auslassöffnung (16) im oberen Teil des Raumes (13) vorgesehen sind.

# FIG. 1.

FIG.2.